# DEMANDE DE BREVET EUROPEEN

(11) **EP 1 035 689 A1**
(43) Date de publication de la demande: **13.09.2000**
(21) Numéro de dépôt: 00410024.4
(22) Date de dépôt: 10.03.2000
(51) Int. Cl.: H04L 12/56, H04Q 11/04

(54) **Dispositif d'association d'index à des adresses**

(30) Priorité: 12.03.1999 FR 9903261
(71) Demandeur: STMicroelectronics SA, 94250 Gentilly Cedex (FR)
(72) Inventeur: Moniot, Pascal, 38190 Bernin (FR)
(74) Mandataire: de Beaumont, Michel

(57) **Abrégé**

L'invention concerne un dispositif d'association d'index à des adresses choisies parmi un nombre de valeurs plus grand que le nombre d'index disponibles, comprenant une mémoire (30) contenant des index et des mots de vérification respectifs correspondant à des bits prédéterminés des adresses associées aux index ; un circuit de compactage (39) recevant une adresse courante (A) et supprimant dans cette adresse des bits déterminés par un motif (41) tel que les bits supprimés correspondent à des bits des mots de vérification, l'adresse compactée fournie par le circuit de compactage servant à sélectionner en lecture un emplacement de la mémoire ; et un comparateur (45) indiquant que l'adresse courante correspond à l'emplacement mémoire sélectionné si les bits du mot de vérification de l'emplacement sélectionné sont égaux aux bits correspondants de l'adresse courante.

## Description

La présente invention concerne une interface multiprotocoles permettant d'établir plusieurs connexions entre un ou plusieurs réseaux ATM et des réseaux de nature différente, tels que des réseaux Ethernet. L'invention concerne plus spécifiquement un dispositif de tri d'adresses ATM (appelées adresses VP/VC) destiné à identifier si une adresse VP/VC contenue dans un paquet arrivant par le réseau ATM est destinée à l'interface, c'est-à-dire si l'adresse VP/VC correspond à une connexion qui a été ouverte dans l'interface.

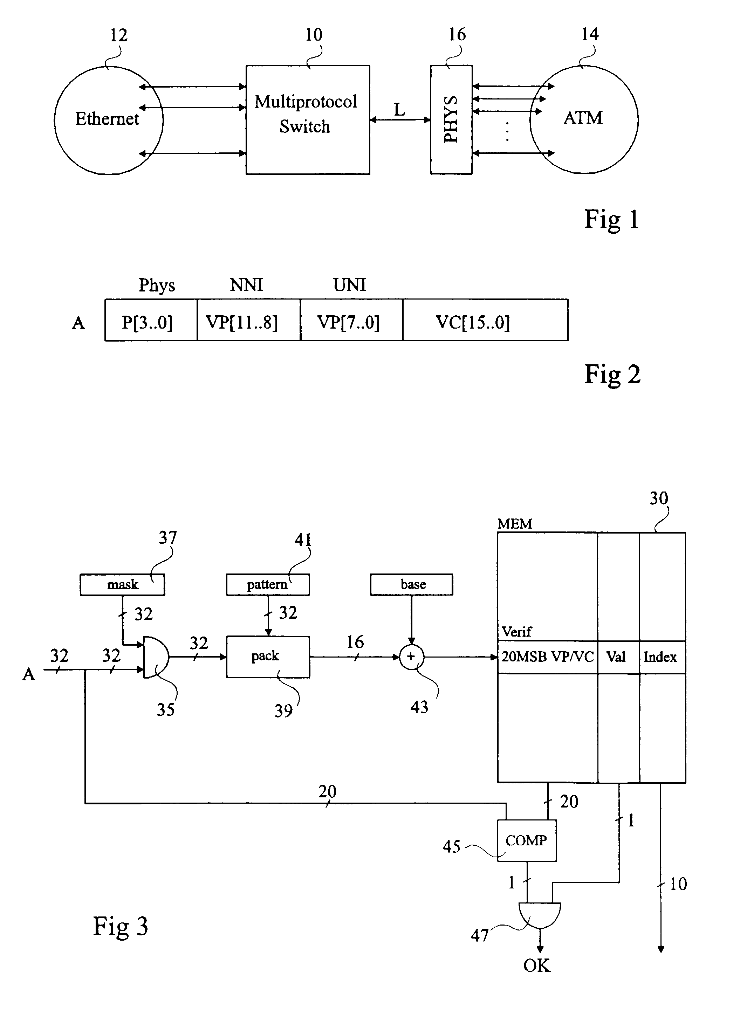

La figure 1 illustre schématiquement une interface multiprotocoles 10 servant à relier plusieurs réseaux Ethernet 12 à plusieurs réseaux ATM 14. La connexion entre l'interface 10 et les plusieurs réseaux ATM 14 s'effectue généralement par l'intermédiaire d'un multiplexeur-démultiplexeur 16 relié par une seule liaison série L (généralement UTOPIA 2) à l'interface 10.

Chaque paquet ou cellule de données transmis sur un réseau ATM contient une adresse VP/VC identifiant le destinataire du paquet. Étant donné que l'on multiplexe des paquets provenant de plusieurs réseaux ATM sur la liaison unique L reliant le circuit 16 à l'interface 10, on doit identifier à quelle liaison physique correspondent les paquets. Pour cela, l'interface 10 ajoute aux adresses VP/VC des paquets transmis sur la liaison L des bits supplémentaires permettant d'identifier la liaison physique.

La figure 2 symbolise une telle adresse A d'un paquet transmis sur la liaison L. Cette adresse contient un champ VC (connexion virtuelle) de 16 bits suivi d'un premier champ VP (chemin virtuel) de 8 bits et d'un deuxième champ VP de 4 bits. Ces trois champs constituent les adresses VP/VC normales. On ajoute à ces champs un champ P de suffisamment de bits pour identifier toutes les liaisons physiques aux réseaux ATM. Par exemple, ce champ P contient 4 bits permettant d'identifier 16 liaisons différentes.

Une liaison ATM peut être de type UNI ("User-Network Interface" ou interface utilisateur-réseau) pour laquelle le nombre de connexions est limité à 2²⁴. Par conséquent, les adresses utilisées sur un réseau UNI sont de 24 bits et utilisent le champ VC et le premier champ VP de 8 bits de la figure 2. Une liaison ATM peut également être de type NNI ("Network-Network Interface" ou interface réseau-réseau). Dans ce cas, le nombre de connexions possibles est multiplié par 16 par rapport à un réseau UNI. En conséquence, les adresses VP/VC utilisées sur une telle liaison exploitent les deux champs VP de la figure 2 et permettent d'identifier jusqu'à 2²⁸ connexions.

Par ailleurs, l'interface multiprotocoles 10 est prévue pour gérer un nombre de connexions nettement inférieur au nombre de connexions possibles sur un réseau ATM. Par exemple, elle peut être prévue pour gérer 2¹⁰ = 1024 connexions. Un problème qui se pose dans une telle interface est d'associer à chacune des connexions ouvertes dans l'interface des paquets ATM entrants qui lui sont destinés. En effet, une adresse A (c'est-à-dire une adresse VP/VC augmentée des bits P nécessaires à identifier la liaison physique) peut avoir l'une quelconque de 2³² valeurs (dans l'exemple susmentionné avec 16 liaisons physiques), alors que le nombre de connexions actives est au plus égal à 1024 dans l'exemple. Ainsi, il faut trouver une solution pour associer 1024 adresses choisies parmi 2³² à 1024 connexions actives dans l'interface.

Une première solution immédiate consiste à utiliser une table à 1024 entrées correspondant aux connexions possibles dans l'interface et à inscrire dans cette table les adresses A associées aux connexions actives. Alors, lorsque l'on reçoit un paquet, on en extrait l'adresse A et on parcourt la table jusqu'à la rencontrer. Si on ne rencontre pas l'adresse A dans la table, le paquet correspondant n'était pas destiné à l'interface et il est ignoré.

Cette solution requiert le parcours en moyenne de 512 emplacements de la table pour chaque paquet destiné à l'interface. Si un paquet n'est pas destiné à l'interface, les 1024 emplacements sont systématiquement parcourus pour rien. Ainsi, cette solution est trop coûteuse en temps de calcul.

Une autre solution consiste à utiliser une mémoire associative de 1024 emplacements dans laquelle on inscrit successivement les adresses A associées aux connexions actives dans l'interface. A la réception d'un paquet, son adresse A est extraite et comparée en parallèle à toutes les entrées de la table, laquelle table fournit alors un index de 10 bits associé à l'adresse, si cette adresse est présente dans la table. Cette solution est toutefois trop coûteuse en matériel (elle nécessite 1024 comparateurs de 32 bits et 1024 registres de 42 bits).

Un objet de la présente invention est de prévoir un dispositif d'association d'adresses particulièrement efficace en termes de rapidité et de coût matériel.

Pour atteindre cet objet, la présente invention prévoit un dispositif d'association d'index à des adresses choisies parmi un nombre de valeurs plus grand que le nombre d'index disponibles, comprenant une mémoire contenant des index et des mots de vérification respectifs correspondant à des bits prédéterminés des adresses associées aux index ; un circuit de compactage recevant une adresse courante et supprimant dans cette adresse des bits déterminés par un motif tel que les bits supprimés correspondent à des bits des mots de vérification, l'adresse compactée fournie par le circuit de compactage servant à sélectionner en lecture un emplacement de la mémoire ; et un comparateur indiquant que l'adresse courante correspond à l'emplacement mémoire sélectionné si les bits du mot de vérification de l'emplacement sélectionné sont égaux aux bits correspondants de l'adresse courante.

Selon un mode de réalisation de la présente invention, le dispositif comprend un circuit de masquage qui, selon un masque prédéterminé, annule des bits autres que ceux supprimés par le circuit de compactage, qui correspondent également à des bits des mots de vérification.

Selon un mode de réalisation de la présente invention, les emplacements de la mémoire contiennent, chacun, un bit de validation indiquant si l'emplacement est occupé ou non.

Selon un mode de réalisation de la présente invention, les adresses sont des adresses de réseau ATM, les index identifiant des connexions du dispositif à un ou plusieurs réseaux ATM.

Selon un mode de réalisation de la présente invention, les adresses fournies par le circuit de compactage ont une taille de 16 bits, les index ont une taille de 10 bits, et les mots de vérification correspondent aux 20 bits de poids fort des adresses ATM.

Selon un mode de réalisation de la présente invention, le dispositif est prévu pour être connecté à 16 réseaux ATM, les adresses fournies au dispositif ayant 4 bits de poids fort permettant d'identifier les réseaux ATM correspondants.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement une interface multiprotocoles connectée entre des réseaux ATM et des réseaux Ethernet ;
la figure 2, précédemment décrite, représente la structure d'une adresse ATM, qui a été augmentée d'une adresse d'identification de liaison physique ; et
la figure 3 représente schématiquement un mode de réalisation de dispositif d'association d'adresses selon la présente invention.

Un dispositif d'association d'adresses selon l'invention utilise une négociation qui s'effectue classiquement entre l'interface et un réseau ATM lors d'une phase d'initialisation. Cette négociation s'effectue sur trois connexions spéciales qui sont en permanence actives, appelées signalisation, métasignalisation et multidiffusion. Les adresses de ces connexions sont prédéfinies et sont identiques quel que soit le type de réseau.

Lors de la négociation, qui s'effectue à chaque ouverture de connexion en utilisant la connexion de signalisation, le réseau ATM fournit à l'interface des adresses VP/VC. En fonction de ces adresses, l'interface détermine une règle de calcul des adresses qu'elle utilisera effectivement pour les connexions qui seront créées. L'interface n'accepte une adresse VP/VC que si elle n'entre pas en collision avec l'adresse d'une connexion active dans l'interface. En cas de collision, l'interface refuse l'adresse et le réseau en propose une autre.

La règle de calcul d'adresses établie par l'interface consiste à fixer des bits prédéterminés des adresses VP/VC qui pourront être utilisés par l'interface pour identifier ses connexions. En règle générale, ces bits spécifiques sont les huit bits de poids faible des adresses VP/VC et quatre autres bits arbitraires. Par ailleurs, comme on l'a précédemment indiqué, l'interface doit pouvoir gérer des connexions à plusieurs réseaux ATM, par exemple 16, sur lesquelles on peut utiliser des mêmes adresses VP/VC. Les adresses VP/VC des différents réseaux sont différenciées par les numéros des liens physiques correspondants, codés sur quatre bits dans l'exemple.

En conséquence, l'interface dispose de 16 bits sur 32 pour identifier ses connexions. Etant donné que l'interface, dans l'exemple, gère au plus 2¹⁰ = 1024 connexions, les 16 bits susmentionnés suffisent à identifier toutes ces connexions.

La figure 3 représente schématiquement un mode de réalisation de dispositif selon l'invention pour identifier si une adresse A de 32 bits correspond à une connexion active identifiée par un index de 10 bits.

Le dispositif comprend une zone mémoire 30 qui est avantageusement une ressource partagée par différents processus actifs dans l'interface. Il s'agit, par exemple, d'une mémoire de type SDRAM qui est organisée en mots de 32 bits.

La zone mémoire 30 comporte 2¹⁶ mots consécutifs de 32 bits. Chacun de ces mots est susceptible d'être associé à une connexion active. Etant donné que le nombre maximal de connexions est 1024, au plus 1024 emplacements parmi 2¹⁶ sont utilisés dans la zone mémoire 30. Ce taux d'inoccupation est en fait peu gênant, car on peut utiliser une mémoire standard dont le prix par bit est particulièrement bas.

Chaque mot de la zone 30 est susceptible de contenir un index de 10 bits d'identification d'une connexion, un bit de validation indiquant que l'emplacement est utilisé ou non par une connexion, et finalement un mot de vérification de 20 bits qui, dans le présent exemple, sont les 20 bits de poids fort de l'adresse VP/VC de la connexion associée à l'emplacement. Les emplacements sont sélectionnés en écriture ou en lecture d'une manière spécifique décrite ci-après.

Une adresse A présentée au dispositif, de 32 bits dans l'exemple, subit un masquage en 35. Le masquage consiste à effectuer une opération ET bit à bit avec un masque stocké dans un registre 37. L'adresse masquée, de 32 bits, subit un compactage en 39 selon un motif stocké dans un registre 41. Le compactage consiste à ramener la taille de l'adresse à 16 bits en éliminant des bits indiqués par le motif 41. A l'adresse de 16 bits ainsi générée, on ajoute une adresse de base en 43 afin de sélectionner un emplacement dans la zone mémoire 30, l'adresse de base étant l'adresse du premier emplacement de la zone 30.

Il y a autant de registres 37 et 41 que de liens physiques, 16 dans l'exemple.

Comme on l'a précédemment indiqué, à l'issue de la négociation effectuée avec les réseaux ATM au démarrage de l'interface, cette dernière établit une règle de calcul déterminant que des bits prédéterminés servent à différencier les connexions possibles dans l'interface, les bits restants étant arbitraires. Le rôle du circuit de compactage 39 est de ne conserver dans les adresses A que les bits servant à différencier les connexions dans l'interface.

Généralement, le motif 41 est fixe pendant toute la durée de fonctionnement de l'interface. Il peut néanmoins, dans certains cas, être modifié en cours de fonctionnement. Alors, toutes les connexions en cours sont fermées, car on ne pourra plus les identifier.

Le masquage effectué en 35 sert seulement dans certains cas où le nombre de bits que peut utiliser l'interface pour identifier les connexions est plus restreint que le nombre de bits restant après compactage. Dans une telle situation, le masque 37 est choisi pour annuler dans l'adresse A des bits qui ne sont pas supprimés par le compactage.

A la création d'une nouvelle connexion par l'interface, le réseau ATM concerné attribue une adresse VP/VC à la connexion, cette adresse VP/VC étant augmentée des 4 bits d'identification du réseau ATM pour constituer l'adresse A. Cette adresse A est appliquée au dispositif de la figure 3 tandis que la mémoire 30 est sélectionnée en écriture. L'adresse compactée finalement fournie à la mémoire 30 sélectionne un emplacement dans lequel est inscrit l'index de la nouvelle connexion, un bit de validation à 1, et un mot de vérification dont le rôle sera compris ci-après.

Désormais, à chaque fois que la même adresse A est présentée au dispositif, cette adresse sélectionne le même emplacement de la zone mémoire 30. Néanmoins, il existe une famille d'adresses A qui sélectionnent toutes le même emplacement. En effet, ce sera le cas pour toutes les adresses A dont les bits conservés par le circuit de compactage 39 sont égaux et qui diffèrent seulement par les bits supprimés, étant donné que ces adresses produiront toutes la même adresse compactée. Le mot de vérification inscrit dans les emplacements de la zone mémoire 30 sert à éviter cette ambiguïté.

De façon générale, le mot de vérification contient, parmi les bits de l'adresse attribuée à la connexion, tous les bits qui sont supprimés par le compactage 39 et annulés par le masquage 35. Si on considère seulement le compactage, ce mot de vérification contient en théorie 16 bits dans l'exemple choisi.

Ainsi, comme cela est représenté, de l'adresse A présentée au dispositif, on dérive les bits qui sont supprimés par le compactage, lesquels bits sont comparés en 45 aux bits du mot de vérification lu dans l'emplacement sélectionné. En cas d'égalité, l'adresse A correspond à la connexion de l'emplacement sélectionné et l'index mémorisé dans cet emplacement identifie la connexion.

Bien entendu, il faut que l'emplacement corresponde à une connexion active, ce qui est indiqué par le bit de validation. Ainsi, finalement, une porte ET 47 recevant la sortie du comparateur 45 et le bit de validation indique si l'adresse A correspond effectivement à une connexion active dans l'interface.

En pratique, pour simplifier la structure du dispositif, les mots de vérification stockés dans la zone mémoire 30 sont les 20 bits de poids fort des adresses VP/VC attribuées. Ce choix requiert que les 8 bits de poids faible des adresses VP/VC ne soient jamais supprimés ou masqués. Or c'est généralement le cas. Les 4 bits restants qui ne sont pas supprimés ou masqués sont des bits arbitraires parmi les 20 bits de poids fort.

Les bits permettant d'identifier les liaisons physiques à des réseaux ATM ne sont pas supprimés par le circuit de compactage.

On remarquera que les emplacements de la zone mémoire 30 sont généralement de trente deux bits, ce qui suffit à stocker un index de 10 bits, un bit de validation, et les 20 bits des mots de vérification.

A la fermeture d'une connexion, l'interface annule le bit de validation dans l'emplacement correspondant de la zone mémoire 30.

## Revendications

1. Dispositif d'association d'index à des adresses choisies parmi un nombre de valeurs plus grand que le nombre d'index disponibles, caractérisé en ce qu'il comprend :
• une mémoire (30) contenant des index et des mots de vérification respectifs correspondant à des bits prédéterminés des adresses associées aux index ;
• un circuit de compactage (39) recevant une adresse courante (A) et supprimant dans cette adresse des bits déterminés par un motif (41) tel que les bits supprimés correspondent à des bits des mots de vérification, l'adresse compactée fournie par le circuit de compactage servant à sélectionner en lecture un emplacement de la mémoire ; et
• un comparateur (45) indiquant que l'adresse courante correspond à l'emplacement mémoire sélectionné si les bits du mot de vérification de l'emplacement sélectionné sont égaux aux bits correspondants de l'adresse courante.

2. Dispositif selon la revendication 1, caractérisé en ce qu'il comprend un circuit de masquage (35) qui, selon un masque prédéterminé (37), annule des bits autres que ceux supprimés par le circuit de compactage, qui correspondent également à des bits des mots de vérification.

3. Dispositif selon la revendication 1, caractérisé en ce que les emplacements de la mémoire contiennent, chacun, un bit de validation indiquant si l'emplacement est occupé ou non.

4. Dispositif selon la revendication 1, caractérisé en ce que les adresses sont des adresses de réseau ATM, les index identifiant des connexions du dispositif à un ou plusieurs réseaux ATM.

5. Dispositif selon la revendication 4, caractérisé en ce que les adresses fournies par le circuit de compactage ont une taille de 16 bits, les index ont une taille de 10 bits, et les mots de vérification correspondent aux 20 bits de poids fort des adresses ATM.

6. Dispositif selon la revendication 5, caractérisé en ce qu'il prévu pour être connecté à 16 réseaux ATM, les adresses fournies au dispositif ayant 4 bits de poids fort permettant d'identifier les réseaux ATM correspondants.
